# EUROPÄISCHE PATENTSCHRIFT

(11) **EP 0 558 895 B1**
(45) Veröffentlichungstag und Bekanntmachung des Hinweises auf die Patenterteilung: **08.11.1995**
(21) Anmeldenummer: 93100603.5
(22) Anmeldetag: 16.01.1993
(51) Int. Cl.: G01M 1/32

(54) **Vorrichtung zum Anbringen eines Auswuchtgewichtes an einem Fahrzeugrad**
Device for the application of a balance weight on an automobile wheel
Dispositif pour l'application d'une masselotte d'équilibrage dans une roue de voiture automobile

(30) Priorität: 28.02.1992 DE 9202618 U
(43) Veröffentlichungstag der Anmeldung: 08.09.1993
(73) Patentinhaber: Köpcke, Gert, S-122 43 Stockholm-Enskede (SE)
(72) Erfinder: Köpcke, Gert, S-122 43 Stockholm-Enskede (SE)
(74) Vertreter: Richter, Werdermann & Gerbaulet

(56) Entgegenhaltungen:
- WO-A-88/07909
- DE-B- 1 084 494

## Beschreibung

Die Erfindung betrifft eine Vorrichtung zum Anbringen eines aus einem Gewichtskörper und einer Haltefeder bestehenden Auswuchtgewichtes an einem Fahrzeugrad, wobei beim Anbringen des Gewichtskörpers die Haltefeder zwischen den Reifen und das Felgenhorn geschoben wird, wobei die Vorrichtung eine lösbare Halterungseinrichtung zur Aufnahme der Haltefeder des Auswuchtgewichtes aufweist.

Bisher werden die Auswuchtgewichte zum Auswuchten der immer vorhandenen Unwucht in Reifen und Felge, die aus einem Gewichtskörper, vorzugsweise aus Blei, und einer metallischen Feder bestehen, von Hand an dem auszuwuchtenden Rad befestigt, indem der freie Endabschnitt der gebogenen Haltefeder über das Felgenhorn geschoben bzw. gedrückt oder geschlagen wird. Der freie Endabschnitt der Haltefeder wird dabei vermittels eines geeigneten Werkzeugs, beispielsweise eines Hammers, schlagartig über das Felgenhorn geschoben.

Die Problematik bei den heute aufgrund verbesserter Herstellungstechniken immer kleiner werdenden Unwuchten besteht darin, daß bei der Handhabung der entsprechend kleinen Auswuchtgewichte mit dem Hammer die Haltefeder sehr genau getroffen werden muß, da ansonsten ein Verletzungsrisiko besteht, weil das Auswuchtgewicht üblicherweise von Hand an den vorgesehenen Ort am Rad gehalten wird. Außerdem besteht die Gefahr, durch einen etwas schrägen Hammerschlag das Auswuchtgewicht nicht immer ganz genau an die vorgesehene Stelle zu plazieren, was dann zu einer mangelhaften Auswuchtung führt.

Es ist daher mit der DE-AS 12 82 568 bereits ein Werkzeug zum Befestigen von Klammern, die für das Anbringen von Ausgleichsgewichten am Rand von Fahrzeugfelgen verwendet werden, vorgeschlagen worden. Im einzelnen ist das Werkzeug so ausgebildet, daß es praktisch einen Aufnahmekopf für die Feder des Ausgleichsgewichtes aufweist. Dabei wird das Werkzeug von Hand betätigt.

Mit der DE-OS 36 26 911 ist eine Vorrichtung zum Überbringen von Ausgleichsgewichten und Haltefedern aus Magazinen zu Einsetzköfpen einer Radauswuchteinrichtung beschrieben worden. Hier wird das automatische Montieren von losen Haltefedern mittels Magazinen in Robotern vorgeschlagen, dergestalt, daß die Federn über eigens für dieses Verfahren ausgebildete Gewichtskörper und das Felgenhorn gedrückt werden.

Aus der WO-A1-88/07909 ist eine Vorrichtung zum Anbringen eines aus einem Gewichtskörper und einer Haltefeder bestehenden Auswuchtgewichtes. Diese weist eine Spule und einer dahinter angeordneten Luftkammer auf. Nach dem hämmernden Anbringen eines Auswuchtgewichtes wird der Spulenstrom abgeschaltet, und die Vorrichtung kann weggefahren werden.

Es wäre daher wünschenswert, eine Vorrichtung zu schaffen, mit der maschinell und ohne direkten Einsatz der Hände ein Auswuchtgewicht, welches den konventionellen Aufbau aus Haltefeder und Gewichtskörper aufweist, mit seinem Haltefederabschnitt gezielt auf das Felgenhorn aufsetz- bzw. aufschießbar ist.

Der Erfindung liegt daher die Aufgabe zugrunde, eine Vorrichtung der eingangs genannten Art zu schaffen, mit der ein Auswuchtgewicht maschinell an einem Fahrzeugrad anbringbar ist.

Diese Aufgabe wird durch eine Vorrichtung nach dem Anspruch 1 gelöst.

Der Kern der Erfindung besteht darin, eine lösbare Halterungseinrichtung vorzusehen, in welche das Auswuchtgewicht mit seiner Haltefeder eingesetzt werden kann. Mittels der Halterungseinrichtung wird das Auswuchtgewicht dann an die vorgesehene Stelle am Rad plaziert und durch die hinter der Halterungseinrichtung angeordnete Stoß bzw. Schlageinrichtung ohne Mühe aus der Halterungseinrichtung herausgestoßen und mit der Haltefeder zwischen Reifenwand und Felgenhorn verklemmt.

Als Stoß- bzw. Schlageinrichtung wird gemäß einer bevorzugten Ausführungsform der Erfindung ein mit einem pneumatisch arbeitenden Schlagantrieb verbundener Schlagstempel eingesetzt. Die lösbare Halterungseinrichtung umfaßt dabei vorzugsweise einen konischen oder entenschnabelförmigen Aufnahmekörper mit einer Einziehung mit konischer Einziehungsöffnung.

Als Mittel zum Halten kann bevorzugterweise wenigstens ein Permanentmagnet vorgesehen werden, der in den Aufnahmekörper eingebettet ist oder selbst den Aufnahmekörper bildet.

Es ist jedoch auch möglich, daß die lösbare Halterungseinrichtung eine Einziehung in Form eines Aufnahmekonus umfaßt, wobei der Aufnahmekonus elastische Wände zur klemmenden Halterung oder unelastische, profilierte Wände aufweist, die über Federn gelagert sind. Nach einer anderen Ausführungsform ist vorgesehen, daß die lösbare Halterungseinrichtung bewegliche Halterungsärmchen zum Greifen der Haltefeder aufweisen. Wesentlich ist hierbei, daß über die Halterungseinrichtung die Haltefeder so im Wirkungsbereich des Schlagstempels lösbar gehalten wird, daß bei Betätigung der Vorrichtung die Haltefeder in den Spalt zwischen dem Reifen und das Felgenhorn eingebracht und dort festgeklemmt wird.

Besonders vorteilhaft hinsichtlich der Handhabung ist es, die Vorrichtung gemäß einer weiteren Ausführungsform als Pistole auszubilden, deren Lauf eine Durchgangsbohrung zur Aufnahme des Schlagstempels aufweist, und in deren Mündungsbereich die lösbare Halterungseinrichtung angebracht ist.

Um die Rückstoßwirkung, insbesondere bei einer als Druckluftpistole ausgebildeten Vorrichtung zu mindern bzw. abzufangen, kann vorgesehen werden, die Vorrichtung mit einer Halterungseinrichtung zu versehen, mit der sie lösbar mit der Felge oder dem Reifen verbunden werden kann. Hierbei kann es sich um einen einfachen, z.B. etwa U-förmigen Bügel handeln, der auf den Reifen gesetzt wird und diesen parallel zum Querschnitt übergreift. Hierdurch ist die Vorrichtung lösbar gehalten, und ein Zurückschnellen der Vorrichtung bei ihrer Auslösung wird vermieden. Es ist jedoch genauso möglich, einen Bügel oder eine Halterungsstange mit einem Eingreifhaken o.dgl. zu versehen, der in einer Felgenöffnung verhakt wird oder das Felgenhorn im Spalt zwischen Felge und Reifen übergreift, und so die Vorrichtung gegen eine Rückstoßbewegung sichert. Es ist dabei zu beachten, daß die Kraftrichtung des Rückstoßes der Stoß- bzw. Schlageinrichtung in Richtung der Handkraft und/oder der Halterungseinrichtung ausgerichtet ist, um die Haltefeder des Auswuchtgewichtes sicher über das Felgenhorn zu drücken.

Bei einer Anordnung der Vorrichtung mit einem eigenständigen, verfahrbaren Rahmen mit ausreichendem Eigengewicht, der beispielsweise über Bremsen blockierbar ist, oder an einer Auswuchtmaschine tritt dieses Problem ohnehin nicht auf.

Andere vorteilhafte Ausführungsformen der Erfindung ergeben sich aus den Unteransprüchen und der nachfolgenden Beschreibung.

Die Erfindung soll nachfolgend im Zusammenhang mit der Zeichnung anhand von Ausführungsbeispielen näher erläutert werden. Es zeigen
- **Fig. 1**: die Situation beim Einsatz der Vorrichtung nach der Erfindung am Rad eines Fahrzeugs,
- **Fig. 2**: im Querschnitt eine übliche Form eines Auswuchtgewichtes, welches für den Einsatz mit der Vorrichtung nach der Erfindung geeignet ist,
- **Fig. 3-9**: verschiedene Ausführungsformen der lösbaren Halterungseinrichtung für die Vorrichtung nach der Erfindung,
- **Fig. 10A-C**: in verschiedenen Ansichten eine erste bevorzugte Ausführungsform der lösbaren Halterungseinrichtung, welche als Permanentmagnet ausgebildet ist,
- **Fig. 11A-C**: in verschiedenen Ansichten eine zweite, besonders bevorzugte Ausführungsform der lösbaren Halterungseinrichtung, welche als Permanentmagnet ausgebildet ist, und
- **Fig. 12**: im Querschnitt die Gesamtansicht einer besonders bevorzugten Ausführungsform der Vorrichtung nach der Erfindung, die als Pistole für Druckluftbetrieb vorgesehen und zu anderen in der Werkstatt benutzten Druckluftwerkzeugen kompatibel ist.

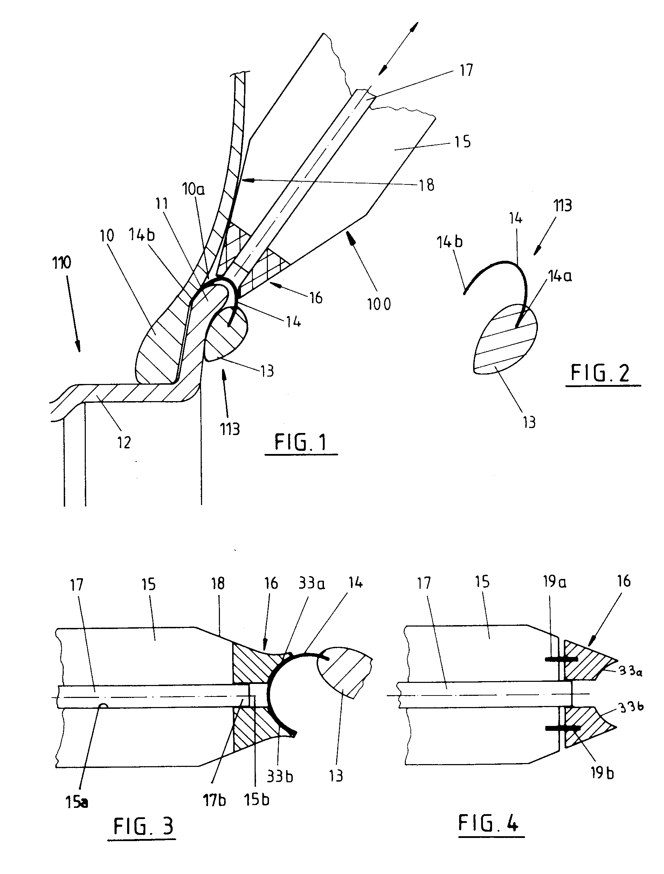

In Fig. 1 ist die Situation beim Anbringen eines Auswuchtgewichtes 113 an einem Fahrzeugrad 110 mittels der erfindungsgemäßen Vorrichtung 100 dargestellt. Das Auswuchtgewicht 113 besteht, wie in Fig. 2 der Deutlichkeit halber noch einmal separat wiedergegeben ist, aus einem Gewichtskörper 13 (üblicherweise aus Blei), in den eine gebogene Haltefeder 14 (z.B. aus einem Stahlblech) mit ihrem einen Ende 14a in der gezeigten Weise eingelassen bzw. eingegossen ist.

Mit dem anderen freien Ende 14b wird die Haltefeder 14 zwischen das Felgenhorn 11 einer Felge 12 und die daran anliegende Seitenwand eines Reifens 10 geklemmt, so daß die Haltefeder 14 das Felgenhorn 11 umgreift und der Gewichtskörper 13 auf der Außenseite des Felgenhorns 11 in seiner Lage fixiert wird.

Für das Anbringen des Auswuchtgewichtes 113 wird nun eine Vorrichtung nach der Erfindung verwendet, die grundsätzlich aus einer lösbaren Halterungseinrichtung 16 für die Haltefeder 14 und einer dahinter angeordneten Stoß- bzw. Schlageinrichtung - im Falle der Fig. 1 einem länglichen Schlagstempel 17 - besteht. Der Schlagstempel 17 wird in einer Durchgangsbohrung 15a in einem Kopfstück 15 geführt. Er ist in Längsrichtung beweglich und stößt bei seiner Betätigung durch eine Durchgangsöffnung 15b der lösbaren Halterungseinrichtung 16 hindurch und dann die Haltefeder 14 aus der Halterungseinrichtung 16.

Wenn nun diese Vorrichtung in geeigneter Weise an der Reifenwand anliegend in den Bereich des Felgenhorns 11 gehalten wird, dann weist der Endbereich 14b der Haltefeder 14 in den keilförmigen Spalt 10a zwischen Felgenhorn 11 und Reifen 10 und wird beim Betätigen der Vorrichtung von dem Schlagstempel 17 in diesen keilförmigen Bereich eingeschossen. Er übergreift dann das Felgenhorn 11 und das Auswuchtgewicht 113 umfaßt klemmend den Rand des Felgenhorns 11.

Die Außenform von Kopfstück 15 und Halterungseinrichtung 16 ist vorzugsweise konisch, um eine gute Zugänglichkeit zu erreichen. Auch sollte eine gerade Anlagefläche 18 zur Anlage an den Reifen 10 vorgesehen sein, um eine gezielte Ausrichtung der Vorrichtung zu ermöglichen.

Für die lösbare Halterungseinrichtung 16 kommen verschiedene Möglichkeiten der Ausführung in Betracht, die in den Figuren 3 bis 9 schematisch dargestellt sind:
Gemäß Fig. 3 kann die Halterungseinrichtung 16 als Einziehung in Form eines Aufnahmekonus mit elastischen Wänden 33a,b ausgebildet sein, die sich bei Aufnahme der Haltefeder 14 verformen und die Feder klemmend haltern.

Gemäß Fig. 4 kann die Halterungseinrichtung 16 auch als Einziehung in Form eines Aufnahmekonus mit unelastischen, profilierten Wänden 33a,b ausgebildet sein. Die Wände 33a,b sind dann z.B. über Federn 19a,b oder elastische Schrauben gelagert, um bei Aufnahme der Haltefeder 14 nachzugeben und die Haltefeder klemmend zu haltern.

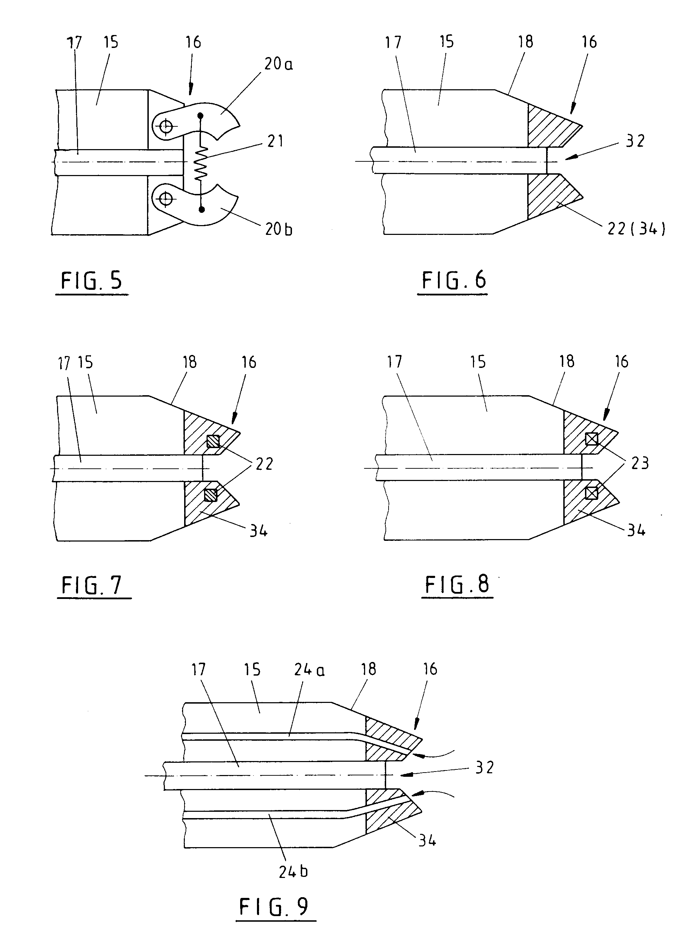

Es ist weiterhin möglich, gemäß Fig. 5 an der Halterungseinrichtung 16 kleine Halterungsärmchen 20a,b vorzusehen, die beispielsweise mit einer Zugfeder 21 beaufschlagt sind. In diesem Zusammenhang ist es aber auch denkbar (in Fig. 5 nicht gezeigt), die Halterungsärmchen 20a,b durch eine geeignete Mechanik mit elektrischem, hydraulischem oder pneumatischem Antrieb derart anzutreiben, daß sie die Haltefeder 14 greifen und bei vorschießendem Schlagstempel 17 wieder freigeben.

Gemäß Fig. 6 bis 9 kann die Halterungseinrichtung 16 aber auch als Einziehung in einem Aufnahmekörper 34 ausgebildet sein, der im Inneren Mittel zum Halten der Feder enthält. Die Mittel können einen Permanentmagneten umfassen, wobei der Aufnahmekörper 34 entweder selbst aus einem Permanentmagneten besteht (Fig. 6), oder in den Aufnahmekörper 34 wenigstens ein Permanentmagnet 22 eingelagert ist (Fig. 7). Die Mittel können eine eingelagerte Magnetspule 23, umfassen, die elektrisch ein Magnetfeld zur Halterung erzeugt und gegebenenfalls bei vorschießendem Schlagstempel wieder abgeschaltet wird (Fig. 8). Es ist aber auch denkbar, als Mittel zum Halten eine Ansaugvorrichtung vorzusehen, bei der z.B. durch entsprechende Ansaugkanäle 24a,b Luft aus der Einziehungsöffnung 32 abgesaugt und die Feder so durch Unterdruck gehalten wird (Fig. 9).

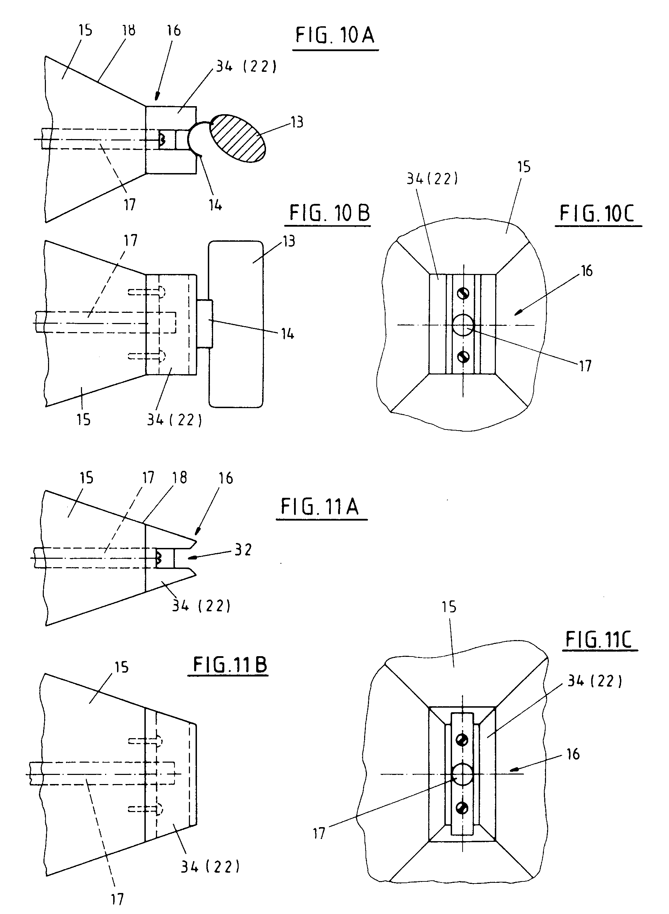

Bevorzugt sind die Lösungen gemäß Fig. 6 und 7, da mit den Permanentmagneten 22 keine weitere Fremdenergie für die Halterung benötigt wird. Zwei Ausführungsformen dieser Lösungen sind in verschiedenen Ansichten in Fig. 10A-10C und 11A-11C wiedergegeben. Die Außenform des Aufnahmekörpers 34 ist dabei entweder konisch oder entenschnabelförmig, um eine gute Zugänglichkeit zu erreichen. Am Aufnahmekörper 34 ist vorzugsweise eine gerade Anlagefläche 18 zur Ermöglichung einer gezielten Anlage vorgesehen. Die Form der Einziehungsöffnung 32 ist bevorzugt konisch, um eine genau ausgerichtete Halterung der Haltefeder 14 zu ermöglichen. Der Permanentmagnet 22 ist an das Kopfstück 15 beispielsweise angeschraubt und weist in der Mitte eine Durchgangsbohrung auf, durch welche der Schlagstempel 17 hindurch auf die gehaltene Haltefeder 14 wirken kann.

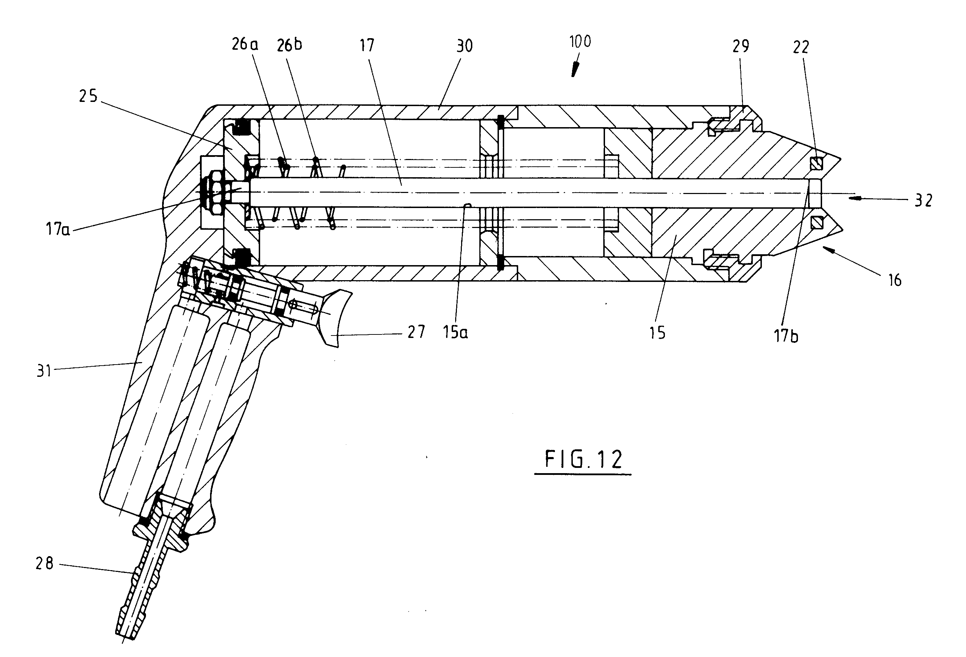

Die Stoß- bzw. Schlageinrichtung, insbesondere also der Schlagstempel 17, kann pneumatisch, hydraulisch oder elektrisch (z.B. über einen Elektromotor und Exenter) oder auch anders angetrieben werden. Die bevorzugte Ausführungsform besteht in einem pneumatischen Schlagantrieb, der in Kfz-Werkstätten für andere Zwecke an sich bekannt und verbreitet ist und anhand der Fig. 12 näher erläutert werden soll.

Der Grundaufbau der gesamten Vorrichtung 100 entspricht einer üblichen Einschießpistole. Dieser ein Gehäuse 30 und einen Handgriff 31 umfassende Grundaufbau zeichnet sich dadurch aus, daß mittig in der Pistole wie ein Lauf eine Durchgangsbohrung 15a vorgesehen ist, in welcher der Schlagstempel 17 geführt ist. Der Schlagstempel 17 wird bei 17a über einen Druckluftkolben mit einer Kolbenscheibe 25 betätigt. Dabei sind Druckfedern 26a,b so angeordnet, daß sie sich mit ihrem einen Ende am Gehäuse 30 der Pistole und mit ihrem anderen Ende an der Kolbenscheibe 25 abstützen und bei Auslösung und folgender Schlagbewegung des Druckkolbens und des Schlagstempels 17 zusammengedrückt werden. Nach Anbringung des Auswuchtgewichtes wird dann der Druckkolben und damit auch der Schlagstempel 17 von den Druckfedern 26a,b wieder in seine Ausgangslage gebracht. Zur Betätigung des Druckkolbens wird der Pistole Druckluft über eine am Handgriff 31 angebrachte Schlauchtülle 28 und ein durch einen Handabzug 27 betätigtes Ventil in an sich bekannter Weise zugeführt.

Im Mündungsbereich der Einschießpistole ist ein konisch zulaufendes Kopfstück 15 eingesetzt und mittels einer Überwurfmutter 29 fixiert. Das Kopfstück 15 weist ebenfalls eine Durchgangsbohrung auf, durch die der Schlagstempel 17 mit seinem Ende 17b auf die Haltefeder eines Auswuchtgewichtes wirken kann, welches im Bereich des Austritts der Durchgangsbohrung in einer Einziehung mit konischer Einziehungsöffnung 32 gehalten wird. Zur Halterung der Haltefeder sind die bereits beschriebenen Mittel vorgesehen, die vorzugsweise aus einem im Kopfstück eingelagerten Permanentmagneten 22 bestehen.

## Patentansprüche

1. Vorrichtung (100) zum Anbringen eines aus einem Gewichtskörper (13) und einer Haltefeder (14) bestehenden Auswuchtgewichtes (113) an einem Fahrzeugrad (110), wobei beim Anbringen des Gewichtskörpers (13) die Haltefeder (14) zwischen den Reifen (10) und das Felgenhorn (11) geschoben wird, wobei die Vorrichtung eine lösbare Halterungseinrichtung (16) zur Aufnahme der Haltefeder (14) des Auswuchtgewichtes (113) aufweist,
dadurch gekennzeichnet,
daR die Vorrichtung (100) eine hinter der lösbaren Halterungseinrichtung (16) angeordnete Stoß- bzw. Schlageinrichtung umfaßt, welche bei ihrer Betätigung das Auswuchtgewicht (113) aus der Halterungseinrichtung (16) herausstoßend ausgebildet ist.

2. Vorrichtung nach Anspruch 1,
dadurch gekennzeichnet,
daß die Stoß- bzw. Schlageinrichtung einen länglichen Schlagstempel (17) umfaßt, wobei der Schlagstempel (17) an seinem einen Ende (17a) mit einem Schlagantrieb in Verbindung steht und mit seinem anderen Ende (17b) durch eine Durchgangsöffnung (15b) der Halterungseinrichtung (16) hindurch auf die Haltefeder (14) des Auswuchtgewichtes wirk bar ausgebildet ist.

3. Vorrichtung nach Anspruch 2,
dadurch gekennzeichnet,
daß der Schlagantrieb als hydraulischer oder elekrischer Antrieb ausgebildet ist.

4. Vorrichtung nach Anspruch 2,
dadurch gekennzeichnet,
daß der Schlagantrieb als mit Druckluft arbeitender Antrieb ausgebildet ist.

5. Vorrichtung nach einem der Ansprüche 1 bis 4,
dadurch gekennzeichnet,
daß die lösbare Halterungseinrichtung (16) eine Einziehung in Form eines Aufnahmekonus (33) umfaßt.

6. Vorrichtung nach Anspruch 5,
dadurch gekennzeichnet,
daß der Aufnahmekonus (33) elastische Wände zur klemmenden Halterung aufweist.

7. Vorrichtung nach Anspruch 5,
dadurch gekennzeichnet,
daß der Aufnahmekonus (33) unelastische, profilierte Wände aufweist, die über Federn (19a,b) gelagert sind.

8. Vorrichtung nach einem der Ansprüche 1 bis 4,
dadurch gekennzeichnet,
daß die lösbare Halterungseinrichtung (16) bewegliche Halterungsärmchen (20a,b) zum Greifen der Haltefeder (14) aufweist.

9. Vorrichtung nach Anspruch 8,
dadurch gekennzeichnet,
daß die Halterungsärmchen (20a,b) federbeaufschlagt sind.

10. Vorrichtung nach Anspruch 8,
dadurch gekennzeichnet,
daß die Halterungsärmchen (20a,b) elektrisch, hydraulisch oder pneumatisch angetrieben werden, derart, daß sie die Haltefeder (14) zunächst greifen und bei vorschießendem Schlagstempel (17) wieder freigeben.

11. Vorrichtung nach einem der Ansprüche 1 bis 4,
dadurch gekennzeichnet,
daß die lösbare Halterungseinrichtung (16) einen Aufnahmekörper (34) mit einer Einziehung umfaßt, und in dem Aufnahmekörper (34) Mittel zum Halten der Haltefeder (14) vorgesehen sind.

12. Vorrichtung nach Anspruch 11,
dadurch gekennzeichnet,
daß die Mittel zum Halten wenigstens einen Permanentmagneten (22) umfassen, der in den Aufnahmekörper (34) eingebettet ist oder selbst den Aufnahmekörper (34) bildet.

13. Vorrichtung nach Anspruch 11,
dadurch gekennzeichnet,
daß die Mittel zum Halten eine Magnetspule (23) umfassen.

14. Vorrichtung nach Anspruch 11,
dadurch gekennzeichnet,
daß die Mittel zum Halten eine Ansaugvorrichtung umfassen.

15. Vorrichtung nach einem der Anspruch 11 bis 14,
dadurch gekennzeichnet,
daß die Außenform des Aufnahmekörpers (34) entweder konisch oder vorzugsweise entenschnabelförmig ist und der Aufnahmekörper (34) außen eine gerade Anlagefläche (18) zur Ermöglichung einer gezielten Anlage an den Reifen (10) aufweist.

16. Vorrichtung nach einem der Ansprüche 11 bis 15,
dadurch gekennzeichnet,
daß der Aufnahmekörper (34) eine konische Einziehungsöffnung (32) aufweist.

17. Vorrichtung nach einem der Ansprüche 1 bis 16,
dadurch gekennzeichnet,
daß die Vorrichtung (100) als Pistole ausgebildet ist, deren Lauf eine Durchgangsbohrung zur Aufnahme des Schlagstempels (17) aufweist, und in deren Mündungsbereich die lösbare Halterungseinrichtung (16) angebracht ist.

18. Vorrichtung nach einem der Ansprüche 1 bis 17,
dadurch gekennzeichnet,
daß die Vorrichtung eine Halterungseinrichtung zur lösbaren Verbindung und/oder Befestigung der Vorrichtung mit der Felge (12) oder dem Reifen (10) aufweist.

19. Vorrichtung nach Anspruch 18,
dadurch gekennzeichnet,
daß die Halterungseinrichtung ein Übergreifbügel zum Übergreifen des Reifens (10) ist.

20. Vorrichtung nach Anspruch 18,
dadurch gekennzeichnet,
daß die Halterungseinrichtung ein Einhängbügel zum Einhängen oder Eingreifen an oder in die Felge (12) ist.

## Claims

1. Device (100) for mounting a balancing weight (113) comprising a weight body (13) and a retaining spring (14) on a vehicled wheel (110), in which, when the weight body (13) is mounted, the retaining spring (14) is thrust between the tire (10) and the wheel flange (11), with the device being provided with a detachable mounting means (16) for receiving the retaining spring (14) of the balancing weight (113),
characterized in that
the device (100) comprises a percussion or striking means disposed behind the detachable mounting means (16) which, when actuated, is designed so as to knock the balancing weight (113) out from the mounting means (16).

2. Device according to Claim 1,
characterized in that
the percussion or striking means comprises an elongated impact plunger (17), in which case the impact plunger (17), at one of its ends (17a), is connected to an impact drive and, at its other end (17b), is designed so as to act via a through bore aperture (15b) of the mounting means (16) upon the retaining spring (14) of the balancing weight.

3. Device according to Claim 2,
characterized in that
the impact drive is constructed in the form of a hydraulic or electric drive.

4. Device according to Claim 2,
characterized in that
the impact drive is constructed in the form of a compressed air-operated drive.

5. Device according to any of Claims 1 to 4,
characterized in that
the detachable mounting means (16) comprises a recess in the form of a receiving cone (33).

6. Device according to Claim 5, characterized in that the receiving cone (33) is provided with elastic walls for a clamping form of mounting.

7. Device according to Claim 5, characterized in that the receiving cone (33) is provided with inelastic, grooved walls which are supported by means of springs (19a,b).

8. Device according to any of Claims 1 through 4, characterized in that the detachable mounting means (16) is provided with small movable holding arms (20a,b) for seizing the retaining spring (14).

9. Device according to Claim 8, characterized in that the small holding arms (20a,b) are spring-loaded.

10. Device according to Claim 8, characterized in that the small holding arms (20a,b) are driven electrically, hydraulically or pneumatically in such a way that they first seize the retaining spring (14) and, when the impact plunger (17) shoots forward, release the same again.

11. Device according to any of Claims 1 through 4, characterized in that the detachable mounting means (16) comprises a receiving body (34) having a recess and in that, in the receiving body (34), means are provided for holding the retaining spring (14).

12. Device according to Claim 11, characterized in that the means for holding comprise at least one permanent magnet (22) which is embedded in the receiving body (34) or which itself constitutes the receiving body (34).

13. Device according to Claim 11, characterized in that the means for holding comprises a magnetic coil (23).

14. Device according to Claim 11, characterized in that the means for holding comprises an air suction means.

15. Device according to any of Claims 11 through 14, characterized in that the external configuration of the receiving body (34) is either conical or, preferably, duckbilled, and in that the receiving body (34), on the outside, is provided with a straight contact surface (18) for making a specific bearing against the tire (10) possible.

16. Device according to any of Claims 11 through 15, characterized in that the receiving body (34) has a comical recess aperture (32).

17. Device according to any of Claims 1 through 16, characterized in that the device (100) is constructed in the form of a pistol, whose muzzle is provided with a through bore for accommodating the impact plunger (17) and within whose muzzle range, the detachable mounting means (16) is mounted.

18. Device according to any of Claims 1 through 17, characterized in that the device is provided with a mounting means for the detachable connection and/or attachment of the device to and from the wheel rim (12) or the tire (10).

19. Device according to Claim 18, characterized in that the mounting means is an overlap clamp for engaging over the tire (10).

20. Device according to Claim 18, characterized in that the mounting means is a suspension clamp for being suspended on or engaged into the wheel rim (12).

## Revendications

1. Dispositif (100) pour l'application d'un poids d'équilibrage (113) constitué par un poids (13) et un ressort de retenue (14) sur une roue de véhicule (110), le ressort de retenue (14) étant glissé, lors de l'application du poids (13), entre le pneu (10) et le cornet (11) de la jante, le dispositif présentant un dispositif d'attache (16) amovible pour recevoir le ressort de retenue (14) du poids d'équilibrage (113),
caractérisé en ce
que le dispositif (100) comprend un dispositif à choc ou à frapper, placé derrière le dispositif d'attache (16) amovible, qui est configuré en poussant, lors de son actionnement, le poids d'équilibrage (113) hors du dispositif d'attache (16).

2. Dispositif selon la revendication 1,
caractérisé en ce
que le dispositif à choc ou à frapper comprend un poinçon à frapper (17) allongé, le poinçon à frapper (17) étant en relation à l'une de ses extrémités (17a) avec un entraînement à frapper et étant configuré en pouvant agir avec son autre extrémité (17b), en traversant un orifice de passage (15b) du dispositif d'attache (16), sur le ressort de retenue (14) du poids d'équilibrage.

3. Dispositif selon la revendication 2,
caractérisé en ce
que l'entraînement à frapper est configuré comme un entraînement hydraulique ou électrique.

4. Dispositif selon la revendication 2,
caractérisé en ce
que l'entraînement à frapper est configuré comme un entraînement fonctionnant avec de l'air comprimé.

5. Dispositif selon l'une des revendications 1 à 4,
caractérisé en ce
que le dispositif d'attache (16) amovible comprend une contracture en forme de cône de logement (33).

6. Dispositif selon la revendication 5,
caractérisé en ce
que le cône de logement (33) présente des parois élastiques pour la fixation par coïncement.

7. Dispositif selon la revendication 5,
caractérisé en ce
que le cône de logement (33) présente des parois non élastiques, profilées qui sont logées au-dessus de ressorts (19a, b).

8. Dispositif selon l'une des revendications 1 à 4,
caractérisé en ce
que le dispositif d'attache (16) amovible présente des petits bras d'attache (20a, b) mobiles pour saisir le ressort de retenue (14).

9. Dispositif selon la revendication 8,
caractérisé en ce
que les petits bras d'attache (20a, b) sont sollicités par des ressorts.

10. Dispositif selon la revendication 8,
caractérisé en ce
que les petits bras d'attache (20a, b) sont entraînés électriquement, hydrauliquement ou pneumatiquement de telle manière qu'ils saisissent tout d'abord le ressort de retenue (14) et qu'il le relâchent lorsque le poinçon à frapper (17) se déplace en avant.

11. Dispositif selon l'une des revendications 1 à 4,
caractérisé en ce
que le dispositif d'attache (16) amovible comprend un corps de logement (34) avec une contracture et que des moyens sont prévus pour retenir le ressort de retenue (14) dans le corps de logement (34).

12. Dispositif selon la revendication 11,
caractérisé en ce
que les moyens de retenue comprennent au moins un aimant permanent (22) qui est encastré dans le corps de logement (34) ou qui forme lui-même le corps de logement (34).

13. Dispositif selon la revendication 11,
caractérisé en ce
que les moyens de retenue comprennent une bobine magnétique (23).

14. Dispositif selon la revendication 11,
caractérisé en ce
que les moyens de retenue comprennent un dispositif d'aspiration.

15. Dispositif selon l'une des revendications 11 à 14,
caractérisé en ce
que la forme extérieure du corps de logement (34) est soit conique, soit de préférence en forme de bec de canard et que le corps de logement (34) présente à l'extérieur une surface d'appui droite (18) pour permettre un appui approprié sur le pneu (10).

16. Dispositif selon l'une des revendications 1 à 15,
caractérisé en ce
que le corps de logement (34) présente une ouverture de contracture (32) conique.

17. Dispositif selon l'une des revendications 1 à 16,
caractérisé en ce
que le dispositif (100) est configuré comme un pistolet dont le canon présente une ouverture de passage pour loger le poinçon à frapper (17) et dans la zone de la bouche duquel le dispositif d'attache amovible (16) est installé.

18. Dispositif selon l'une des revendications 1 à 17,
caractérisé en ce
que le dispositif présente un dispositif d'attache pour (a jonction amovible et/ou la fixation du dispositif à la jante (12) ou au pneu (10).

19. Dispositif selon la revendication 18,
caractérisé en ce
que le dispositif d'attache est un étrier de prise enveloppante pour la prise enveloppante du pneu (10).

20. Dispositif selon la revendication 18,
caractérisé en ce
que le dispositif d'attache est un étrier à accrocher à accrocher ou engrener sur ou dans la jante (12).
